# EUROPEAN PATENT SPECIFICATION

(11) **EP 2 729 044 B1**
(45) Date of publication and mention of the grant of the patent: **14.09.2016**
(21) Application number: 12731450.8
(22) Date of filing: 03.07.2012
(51) Int. Cl.: A47J 45/06, A47J 45/07

(54) **COOKING TOOL**
KOCHUTENSIL
OUTIL DE CUISSON

(30) Priority: 07.07.2011 IT MI20111263
(43) Date of publication of application: 14.05.2014
(73) Proprietor: Aracaria B.V., 1013 BX Amsterdam (NL)
(72) Inventor: ZEPTER, Philip, I-20092 Cinisello Balsamo (IT)
(74) Representative: Viering, Jentschura & Partner mbB Patent- und Rechtsanwälte
(86) International application number: PCT/EP2012/062876
(87) International publication number: WO 2013/004680

(56) References cited:
- DE-U1-202009 016 883
- US-A1- 2011 083 659

## Description

The present invention relates to a cooking tool of the type having a containing body suitable for containing a dish and for being exposed to a heat source, such as a gas flame or a heating plate, as well as a gripping member, e.g. a handle or a knob for manually gripping and moving the entire cooking tool or part thereof. Prior examples of such cooking tools are for example pots and pans with or without lids.

One known type of cooking tool has a gripping member in metal, such as stainless steel, which heats up along with the container body and the user, in order to grasp the gripping member, must protect his/her hands with a pot holder, cloth or oven gloves.

To overcome such drawback pots with plastic or wooden handles have been proposed, the material of which does not heat up to the same extent as the container body and which can be grasped with bare hands and without the use of further protection. However, pots and pans with wooden or plastic handles cannot be used to prepare dishes baked in the oven given that the high temperatures (about 180°C) of the ovens would burn or damage the gripping member. DE 20 2009 016 883 U1 discloses a hand grip for metal cooking device, comprising an attachment seat for being attached to the metal cooking device, a metal hand grip, and a heat isolating piece in form of a tubular sleeve which is mounted between the attachment seat and the hand grip and which thermally isolates the hand grip against the attachment seat.

The purpose of the present invention is therefore to provide a cooking tool of the type specified above having characteristics such as to overcome the drawbacks of the prior art.

A particular purpose of the invention is to propose a cooking tool which is utilisable both inside the oven and on the hob and having a gripping member which does not heat up excessively together with the containing body.

These and other purposes are achieved by a cooking tool according to claim 1, and a cooking tool according to claim 10. Further embodiments of the invention are described in the dependent claims. The cooking tool according to claim 1 comprises a container body suitable for receiving a dish and intended to be exposed to a heat source, and at least one gripping member, wherein the gripping member comprises a metal support portion connected to a wall of the container body, a first metal covering plate arranged on a first side of the support portion, a second metal covering plate arranged on a second side of the support portion opposite to the first side, wherein between each one of the first and second covering plates and the support portion an isolation gap is formed for ventilation with ambient air.

Thanks to the formation of an isolation gap between the metal support portion and the metal
covering plates the covering plates prove substantially thermally insulated from the support portion and, moreover, cooled on both sides by the ambient air. Given that the covering plates are made of metal they resist well to the high temperatures inside the oven and after extraction of the cooking tool from the oven, the covering plates of the gripping member cool very rapidly without however cooling the container body.

To provide a clearer understanding of the invention and appreciate its advantages some of its embodiments will be described below by way of non limiting examples with reference to the appended drawings, wherein:

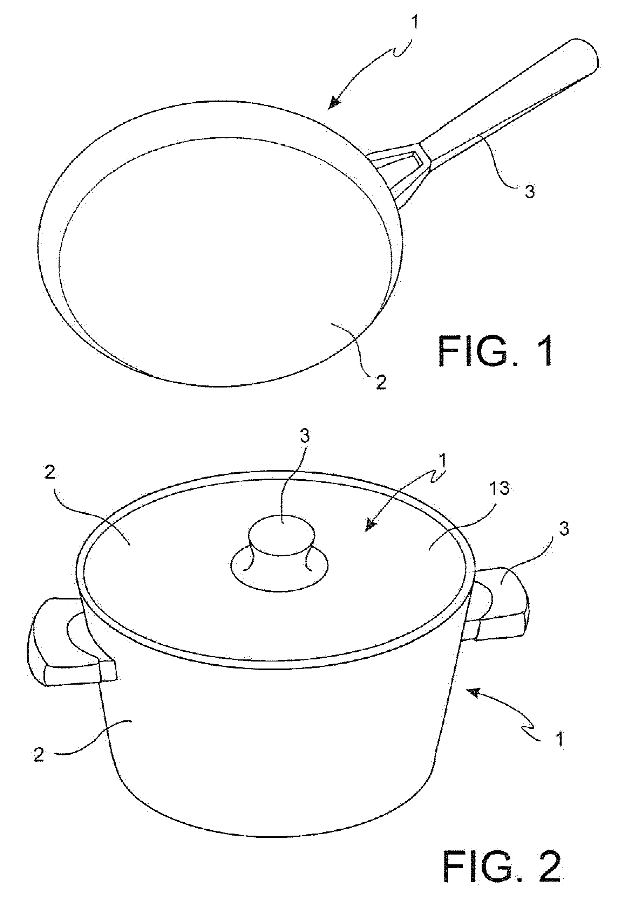

- figure 1 is a schematised illustration of a cooking tool (frying pan) with a handle according to one embodiment of the invention;
- figure 2 is a schematised illustration of a further cooking tool (pot with lid) with two handles and a knob according to one embodiment of the invention;
- figure 3 is an exploded view of a gripping member of a cooking tool according to one embodiment;

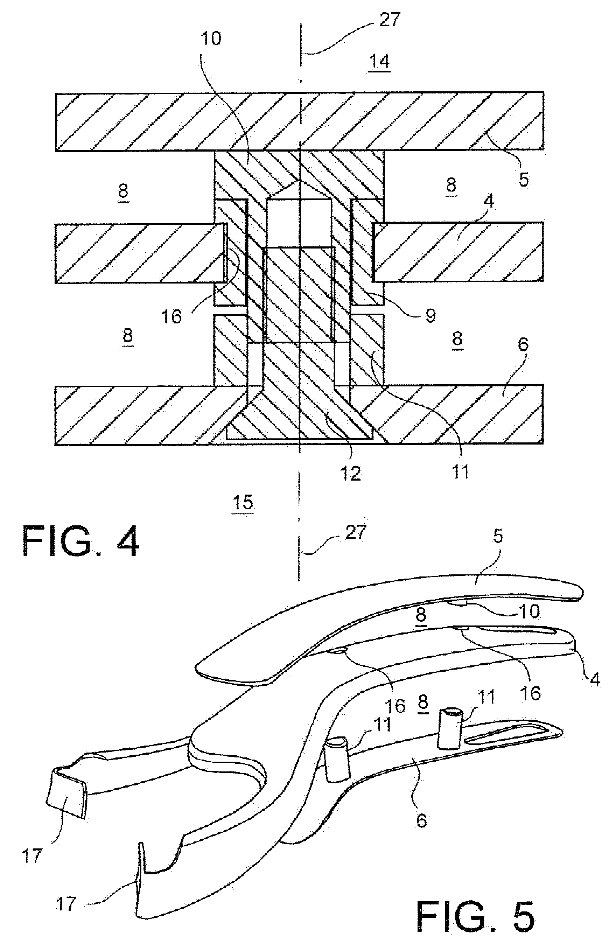

- figure 4 is a cross-section view of the gripping member in figure 3 in an assembled configuration;

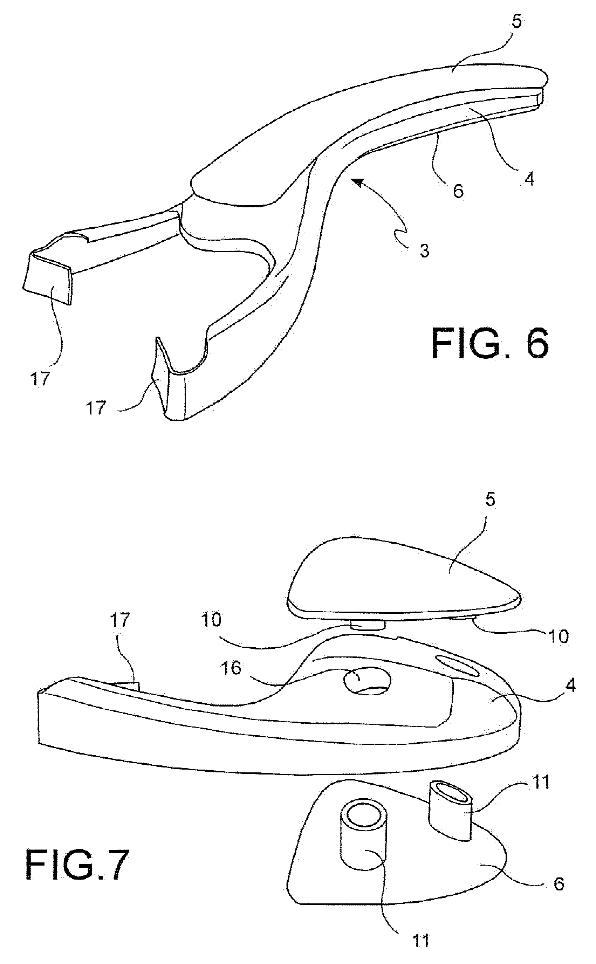

- figures 5 and 6 are perspective views of a handle for a frying pan in a dismantled and assembled configuration according to one embodiment;

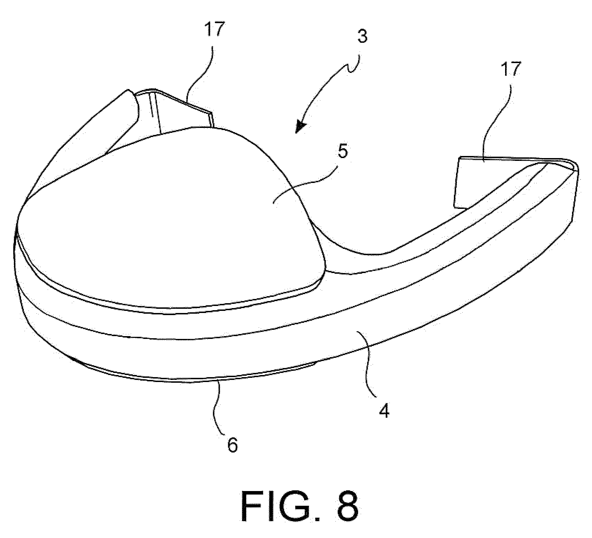

- figures 7 and 8 are perspective views of a handle for a pot in a dismantled and assembled configuration according to one embodiment.

With reference to the drawings, a cooking tool 1, such as a pan or a pot with or without lid 13, is globally denoted by reference numeral 1 and comprises a container body 2 in particular in metal, ceramic or glass material, suitable for receiving a dish and intended to be exposed to a heat source, (in particular an electric or induction hot plate, a gas cooking hob or electric or gas oven) and at least one gripping member 3. The gripping member 3 comprises a metal support portion 4, connected to a wall of the container body 2,a first metal covering plate 5 arranged on a first side 14 of the support portion 4 and a second metal covering plate 6 arranged on a second side 15 of the support portion opposite to the first side 14.

According to one aspect of the invention, between each one of the first and second covering plates 5, 6 and the support portion 4 an isolation gap 8 is formed allowing the covering plates 5, 6 to be ventilated by ambient air on a side thereof facing towards the support portion 4.

Thanks to the formation of the isolation gap 8 between the metal support portion 4 and the metal covering plates 5,6, the covering plates 5, 6 prove substantially thermally insulated from the support portion 4 and, moreover, cooled on both sides by the ambient air. Given that the covering plates 5, 6 are made of metal, they also resist well to the high temperatures inside the oven and, after extraction of the cooking tool 1 from the oven, the covering plates 5, 6 of the gripping member 3 cool very rapidly, without however cooling the container body 2.

According to one embodiment, at least one, but preferably both covering plates 5, 6 are connected to the support portion 4 through the interposition of an insulating insert 9, so as to prevent a direct contact between the covering plate, in particular its metal part, and the support portion 4. This way it is possible to avoid the conducting of heat from metal to metal from the container body 2 to the covering plates 5, 6 of the gripping member 3.

According to one embodiment, the support portion may comprise an elongated and/or flattened body for example in steel having at least one connecting end 17 for the connection of the gripping member 3 (for example by means of welding, screws or shaped couplings or monolithic realisation in one piece) with the container body 2 (in particular pot, pan or lid 13), as well as one, preferably at least two coupling holes 16, suitable for receiving the aforesaid insulating insert 9 and corresponding connecting means 10, 11 of the covering plates 5,6.

According to one embodiment, the insulating insert 9 has a substantially tubular shape (a closed or open transversal annular cross-section) with a through hole 25 and with a substantially cylindrical central portion 18 the outer radial surface 19 of which engages with a radially inner surface 20 of the coupling hole 16, and two flanges 21 formed on two opposite sides of the central portion 18 and protruding radially outwards so as to overlap an edge of the coupling hole 16 on both sides 14, 15 of the support portion 4. The insulating insert 9 may be elastically deformable or formed of several pieces to facilitate its correct positioning in the coupling hole 16. The insulating insert 9 is made in a low thermal conductivity material, preferably in heat-resistant silicone.

The connecting means 5, 6 of the covering plates 5,6 may comprise a first bush 10 protruding from the first covering plate 5 and having a base portion 22 adjacent to the first covering plate 5 and forming an annular shoulder 23 suitable for abutting against one of the flanges 21 of the insulating insert 9, as well as a (preferably internally) threaded portion 24 which extends from the base portion 22 and which is suitable for inserting in the through hole 25 of the insulating insert 9. This way, the base portion 22 acts as a spacer and defines the relative axial position between the first covering plate 5 and the flange 21 of the insulating insert 9 (defining together with the flange 21 the thickness of the first isolation and ventilation gap) and the threaded portion 24 determines the relative position and the connection between the first covering plate 5 and the support portion 4.

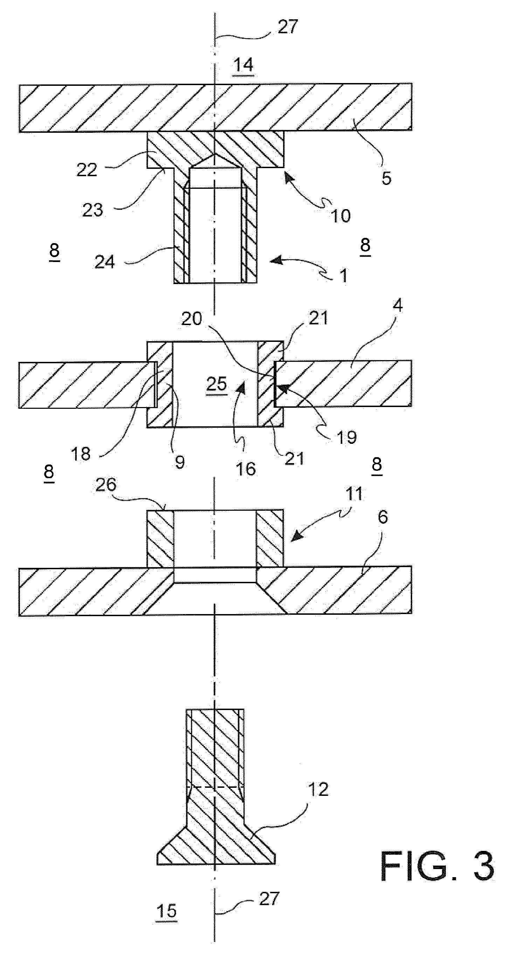

A second bush 11 protrudes from the second covering plate 6 and forms an annular shoulder 26 analogous to the shoulder 23 of the first bush 10 and suitable for abutting against the second flange 21 of the insulating insert 9. This way, the second bush 11 acts as a spacer and defines the relative axial position between the second covering plate 6 and the second flange 21 of the insulating insert 9 (defining together with the flange 21 the thickness of the second isolation and ventilation gap). Axial direction is taken to mean the axial direction of the coupling hole 16 indicated by reference number 27 in figure 3.

The second bush 11 and the second covering plate 6 form a through hole 26 for housing an attachment screw 12 suitable for engaging the threaded portion 24 of the first bush 10 in such a way as to tighten the first bush 10 and the second bush 11 (together with their respective covering plates 5,6) against each other and axially against the insulation insert 9 positioned in the coupling hole 16.

The covering plates 5, 6 are preferably made from stainless steel sheet and have outer edges facing away from the container body 2 and extending beyond the profile of the support portion 4.

According to an alternative embodiment, the gripping member 3 comprises only one metal covering plate which extends substantially on two opposite sides of the support portion 4, wherein between said single covering plate and the support portion 4 the isolation gap 8 for ventilation with ambient air is formed.

Obviously, a person skilled in the art may make further modifications and variations to the cooking tool 1 according to the invention so as to satisfy contingent and specific requirements, while remaining within the sphere of protection of the invention as defined by the following claims.

## Claims

1. Cooking tool (1), in particular a pan or a pot or a lid, comprising a containing body (2) suitable for containing a dish and intended to be exposed to a heat source and at least a gripping member (3), wherein the gripping member (3) comprises:
- a metal support portion (4) connected to a wall of the container body (2),
a first metal covering plate (5) arranged on a first side (14) of the support portion (4),
- a second metal covering plate (6) arranged on a second side (15) of the support portion opposite to the first side (14), wherein between each one of the first and second covering plates (5, 6) and the support portion (4) an isolation gap (8) is formed allowing the covering plates (5, 6) to be ventilated with ambient air on a side thereof facing towards the support portion (4).

2. Cooking tool (1) according to claim 1, wherein both covering plates (5, 6) are connected to the support portion (4) through the interposition of a low thermal conductivity insulating insert (9), so as to prevent a direct contact between the covering plates (5, 6) and the support portion (4).

3. Cooking tool (1) according to claim 2, wherein the support portion (4) comprises a steel body having at least a connecting end (17) connected to the containing body (2) and at least a coupling hole (16) receiving the insulating insert (9) and connecting means (10, 11,12) of the covering plates (5, 6).

4. Cooking tool (1) according to claim 3, wherein the insulating insert (9) has a substantially tubular shape with a through hole (25) and a central portion (18) having a radially outer surface (19) engaged with a radially inner surface (20) of the coupling hole (16), as well as two flanges (21) formed on two opposite sides of the central portion (18) and radially protruding outwards so as to overlap an edge of the coupling hole (16) on both sides (14, 15) of the support portion (4).

5. Cooking tool (1) according to any one of claims 2 to 4, wherein the insulating insert (9) is elastically deformable.

6. Cooking tool (1) according to any one of claims 2 to 4, wherein the insulating insert (9) is made of heat resistant silicone.

7. Cooking tool (1) according to any one of claims 2 to 6, comprising:
- a first bush (10) protruding from the first covering plate (5) and having a base portion (22) adjacent to the first covering plate (5) and forming an annular shoulder (23) abutting against a first flange (21) of the insulating insert (9), as well as a threaded portion (24) protruding from the base portion (22) and inserted in a through hole (25) of the insulating insert (9),
- a second bush (11) protruding from the second covering plate (6) and forming an annular shoulder (26) abutted against a second flange (21) of the insulating insert (9),
- a fastening screw (12) received in a through hole (26) through the second bush (11) and the second covering plate (6), wherein said fastening screw (12) engages the threaded portion (24) of the first bush (10) and tightens the first bush (10) and the second bush (11) one against the other and against the insulating insert (9) placed in the coupling hole (16).

8. Cooking tool (1) according to any one of the previous claims, wherein the covering plates (5, 6) are made of stainless steel sheet.

9. Cooking tool (1) according to any one of the previous claims, wherein the covering plates (5, 6) have outer edges facing away from the containing body (2) and extending beyond the profile of the support portion (4).

10. Cooking tool (1), in particular a pan or a pot or a lid, comprising a containing body (2) suitable for containing a dish and intended to be exposed to a heat source and at least a gripping member (3), wherein the gripping member (3) comprises:
- a metal support portion (4) connected to a wall of the container body (2),
- a metal covering plate extending on two opposite sides of the support portion (4), wherein between said covering plate and the support portion (4) an isolation gap (8) is formed allowing the covering plate to be ventilated with ambient air on a side thereof facing towards the support portion (4).

## Patentansprüche

1. Kochwerkzeug (1), insbesondere eine Pfanne oder ein Topf oder ein Deckel, aufweisend einen Behälterkörper (2), der geeignet ist, eine Speise zu enthalten und der vorgesehen ist, um einer Wärmequelle ausgesetzt zu sein, und mindestens ein Griffelement (3), wobei das Griffelement (3) aufweist:
- einen Metall-Stützabschnitt (4), der mit einer Wand des Behälterkörpers (2) verbunden ist,
eine erste Metall-Abdeckplatte (5), die an einer ersten Seite (14) des Stützabschnitts (4) angeordnet ist,
- eine zweite Metall-Abdeckplatte (6), die an einer zweiten Seite (15) des Stützabschnitts, die der ersten Seite (14) entgegengesetzt ist, angeordnet ist, wobei zwischen jeder der ersten und der zweiten Abdeckplatte (5,6) und dem Stützabschnitt (4) ein Isolierspalt (8) gebildet ist, der erlaubt, dass die Abdeckplatten (5, 6) an einer Seite davon, die dem Stützabschnitt (4) zugewandt ist, mit Umgebungsluft belüftet werden.

2. Kochwerkzeug (1) gemäß Anspruch 1, wobei beide Abdeckplatten (5, 6) mit dem Stützabschnitt (4) verbunden sind durch ein Zwischenpositionieren eines Isoliereinsatzes mit geringer Wärmeleitfähigkeit (9), um einen direkten Kontakt zwischen den Abdeckplatten (5, 6) und dem Stützabschnitt (4) zu verhindern.

3. Kochwerkzeug (1) gemäß Anspruch 2, wobei der Stützabschnitt (4) einen Stahlkörper aufweist, der mindestens ein Verbindungsende (17) hat, welches mit dem Behälterkörper (2) verbunden ist und mindestens ein Verbindungsloch (16), welches den Isoliereinsatz (9) und Verbindungsmittel (10, 11, 12) der Abdeckplatten (5, 6) aufnimmt.

4. Kochwerkzeug (1) gemäß Anspruch 3, wobei der Isoliereinsatz (9) eine im Wesentlichen Tubus-Gestalt hat mit einem Durchgangsloch (25) und einem Mittelabschnitt (18), der eine radiale Außenfläche (19) hat, die mit einer radialen Innenfläche (20) des Verbindungsloch (16) im Eingriff ist, sowie zwei Flansche (21) hat, die an zwei entgegengesetzten Seiten des Mittelabschnitts (18) gebildet sind und radial nach außen vorstehen, sodass sie einen Rand des Verbindungslochs (16) an beiden Seiten (14, 15) des Stützabschnitts (4) überlappen.

5. Kochwerkzeug (1) gemäß irgendeinem der Ansprüche 2 bis 4, wobei der Isoliereinsatz (9) elastisch verformbar ist.

6. Kochwerkzeug (1) gemäß irgendeinem der Ansprüche 2 bis 4, wobei der Isoliereinsatz (9) aus hitzebeständigem Silikon gemacht ist.

7. Kochwerkzeug (1) gemäß irgendeinem der Ansprüche 2 bis 6, aufweisend:
- eine erste Buchse (10), die von der ersten Abdeckplatte (5) vorsteht und einen Basisabschnitt (22) hat, der benachbart zu der ersten Abdeckplatte (5) ist und eine ringförmige Schulter (23) ausbildet, die an einen ersten Flansch (21) des Isoliereinsatzes (9) anstößt, sowie einen Gewindeabschnitt (24) hat, der von dem Basisabschnitt (22) vorsteht und in ein Durchgangsloch (25) des Isoliereinsatzes (9) eingeführt ist,
- eine zweite Buchse (11), die von der zweiten Abdeckplatte (6) vorsteht und eine ringförmige Schulter (26) ausbildet, welche gegen einen zweiten Flansch (21) des Isoliereinsatzes (9) stößt,
- eine Befestigungsschraube (12), die in einem Durchgangsloch (26) durch die zweite Buchse (11) und die zweite Abdeckplatte (6) aufgenommen ist, wobei die Befestigungsschraube (12) in den Gewindeabschnitt (24) der ersten Buchse (10) eingreift und die erste Buchse (10) und die zweite Buchse (11) eine gegen die andere und gegen den in dem Verbindungsloch (16) angeordneten Isoliereinsatz (9) anzieht.

8. Kochwerkzeug (1) gemäß irgendeinem der vorangegangenen Ansprüche, wobei die Abdeckplatten (5, 6) aus Edelstahlblech gemacht sind.

9. Kochwerkzeug (1) gemäß irgendeinem der vorangegangenen Ansprüche, wobei die Abdeckplatten (5, 6) äußere Ränder haben, die von dem Behälterkörper (2) abgewandt sind und sich über das Profil des Stützabschnitts (4) hinaus erstrecken.

10. Kochwerkzeug (1), insbesondere eine Pfanne, ein Topf oder ein Deckel, aufweisend einen Behälterkörper (2), der geeignet ist, eine Speise zu enthalten und der vorgesehen ist, um einer Wärmequelle ausgesetzt zu sein, und mindestens ein Griffelement (3), wobei das Griffelement (3) aufweist:
- einen Metall-Stützabschnitt (4), der mit einer Wand des Behälterkörpers (2) verbunden ist,
eine Metall-Abdeckplatte, die sich an zwei entgegengesetzten Seiten des Stützabschnitts (4) erstreckt, wobei zwischen der Abdeckplatte und dem Stützabschnitt (4) ein Isolierspalt (8) gebildet ist, der erlaubt, dass die Abdeckplatte an einer Seite davon, die dem Stützabschnitt (4) zugewandt ist, mit Umgebungsluft belüftet wird.

## Revendications

1. Instrument de cuisson (1), en particulier une casserole, un faitout ou un couvercle, qui comprend un corps de contenant (2) approprié pour contenir un plat et prévu pour être exposé à une source de chaleur, et au moins un élément de préhension (3), dans lequel l'élément de préhension (3) comprend :
- une partie support métallique (4) connectée à une paroi du corps de contenant (2) ;
- une première plaque de recouvrement métallique (5) agencée sur un premier côté (14) de la partie support (4) ;
- une seconde plaque de recouvrement métallique (6) agencée sur un second côté (15) de la partie support opposé au premier côté (14), dans lequel est formé, entre chacune des première et seconde plaques de recouvrement (5, 6) et la partie support (4), un espace d'isolation (8) qui permet une ventilation des plaques de recouvrement (5, 6) avec l'air ambiant sur un côté de celles-ci qui fait face à la partie support (4).

2. Instrument de cuisson (1) selon la revendication 1, dans lequel les deux plaques de recouvrement (5, 6) sont connectées à la partie support (4) en interposant une pièce rapportée isolante qui présente une faible conductivité thermique (9), de façon à empêcher un contact direct entre les plaques de recouvrement (5, 6) et la partie support (4).

3. Instrument de cuisson (1) selon la revendication 2, dans lequel la partie support (4) comprend un corps en acier qui présente au moins une extrémité de connexion (17) connectée au corps de contenant (2), et au moins un trou d'accouplement (16) qui reçoit la pièce rapportée isolante (9) et des moyens de connexion (10, 11, 12) des plaques de recouvrement (5, 6).

4. Instrument de cuisson (1) selon la revendication 3, dans lequel la pièce rapportée isolante (9) présente une forme sensiblement tubulaire avec un trou traversant (25), et une partie centrale (18) qui présente une surface extérieure de manière radiale (19) qui vient en prise avec une surface intérieure de manière radiale (20) du trou d'accouplement (16), ainsi que deux brides (21) formées sur deux côtés opposés de la partie centrale (18) et qui font saillie de manière radiale vers l'extérieur de façon à recouvrir un bord du trou d'accouplement (16) des deux côtés (14, 15) de la partie support (4).

5. Instrument de cuisson (1) selon l'une quelconque des revendications 2 à 4, dans lequel la pièce rapportée isolante (9) peut être déformée de manière élastique.

6. Instrument de cuisson (1) selon l'une quelconque des revendications 2 à 4, dans lequel la pièce rapportée isolante (9) est réalisée en silicone qui résiste à la chaleur.

7. Instrument de cuisson (1) selon l'une quelconque des revendications 2 à 6, comprenant :
- une première bague (10) qui fait saillie à partir de la première plaque de recouvrement (5) et qui présente une partie base (22) adjacente à la première plaque de recouvrement (5), et qui forme un épaulement annulaire (23) qui vient en butée contre une première bride (21) de la pièce rapportée isolante (9), ainsi qu'une partie filetée (24) qui fait saillie à partir de la partie base (22) et qui est insérée dans un trou traversant (25) de la pièce rapportée isolante (9) ;
- une seconde bague (11) qui fait saillie à partir de la seconde plaque de recouvrement (6), et qui forme un épaulement annulaire (26) qui vient en butée contre une seconde bride (21) de la pièce rapportée isolante (9) ;
- une vis de fixation (12) reçue dans un trou traversant (26) à travers la seconde bague (11) et la seconde plaque de recouvrement (6), dans lequel ladite vis de fixation (12) vient en prise avec la partie filetée (24) de la première bague (10), et serre la première bague (10) et la seconde bague (11) l'une contre l'autre, et contre la pièce rapportée isolante (9) placée dans le trou d'accouplement (16).

8. Instrument de cuisson (1) selon l'une quelconque des revendications précédentes, dans lequel les plaques de recouvrement (5, 6) sont réalisées dans une feuille d'acier inoxydable.

9. Instrument de cuisson (1) selon l'une quelconque des revendications précédentes, dans lequel les plaques de recouvrement (5, 6) présentent des bords extérieurs qui se font face en s'éloignant du corps de contenant (2), et qui s'étendent au-delà du profil de la partie support (4).

10. Instrument de cuisson (1), en particulier une casserole, un faitout ou un couvercle, qui comprend un corps contenant (2) approprié pour contenir un plat et prévu pour être exposé à une source de chaleur, et au moins un élément de préhension (3), dans lequel l'élément de préhension (3) comprend :
- une partie support métallique (4) connectée à une paroi du corps de contenant (2) ;
- une plaque de recouvrement métallique qui s'étend sur deux côtés opposés de la partie support (4), dans lequel est formé, entre ladite plaque de recouvrement et ladite partie support (4), un espace d'isolation (8) qui permet la ventilation de la plaque de recouvrement avec l'air ambiant sur un côté de celle-ci qui fait face à la partie support (4).
